# EUROPEAN PATENT SPECIFICATION

(11) **EP 4 470 924 B1**
(45) Date of publication and mention of the grant of the patent: **08.04.2026**
(21) Application number: 24206862.5
(22) Date of filing: 20.12.2021
(51) Int. Cl.: B64D 37/30, B64D 37/04

(54) **AIRCRAFT WITH HYDROGEN STORAGE TANKS**
FLUGZEUG MIT WASSERSTOFFSPEICHERTANKS
AÉRONEF AVEC RÉSERVOIRS DE STOCKAGE D'HYDROGÈNE

(30) Priority: 19.01.2021 GB 202100665
(43) Date of publication of application: 04.12.2024
(62) Divisional of application: 21215797.8
(73) Proprietor: Rolls-Royce plc, London N1 9FX (GB)
(72) Inventor: Dean, Eric, Derby, DE24 8BJ (GB)
(74) Representative: Rolls-Royce plc

(56) References cited:
- WO-A1-2021/148335
- DE-A1- 102014 107 316
- US-A- 4 796 839
- US-A1- 2004 245 382
- US-A1- 2010 170 997
- KHANDELWAL BHUPENDRA ET AL: "Hydrogen powered aircraft : The future of air transport", PROGRESS IN AEROSPACE SCIENCES, OXFORD, GB, vol. 60, 22 January 2013 (2013-01-22), pages 45 - 59, XP028556142, ISSN: 0376-0421, DOI: 10.1016/J.PAEROSCI.2012.12.002

## Description

### TECHNICAL FIELD

The invention relates to an aircraft having hydrogen storage tanks, especially tanks for storage of gaseous hydrogen to be used as a fuel for aircraft propulsion, for example by use in a fuel cell system and/or a hydrogen-burning gas turbine engine.

### BACKGROUND

Use of hydrogen as a fuel in transport applications, including aeronautical applications, is of interest due to the absence of carbon dioxide generation at the point of use. However, storage of gaseous hydrogen on an aircraft requires a significantly greater fuel storage volume compared to that of a conventional aircraft. For many flight missions, conventional aircraft designs are therefore not appropriate for hydrogen-fuelled aviation. If a conventional aircraft is fitted with hydrogen storage tanks, the usable volume within the aircraft's interior is substantially reduced if the aircraft is intended to maintain its original range and payload.

US patent application publication US 2004/0245382 A1 discloses an aircraft having three elongate liquid nitrogen storage tanks mounted to the upper surface of its fuselage and extending parallel thereto.

### BRIEF SUMMARY

According to the present invention, an aircraft comprises a set of like elongate hydrogen storage tanks each mounted to the exterior of the fuselage and extending parallel thereto, characterised in that the set extends completely azimuthally and contiguously around the fuselage, and in that the aircraft further comprises an aerodynamic fairing, the aerodynamic fairing and the fuselage enclosing the elongate hydrogen storage tanks.

The elongate hydrogen storage tanks of the set may each be cylindrical and have a common diameter. Alternatively, each elongate hydrogen storage tank may have cylindrical arcuate inner and outer portions extending between first and second azimuthal positions with respect to the fuselage, and first and second planar portions connecting the cylindrical arcuate portions at the first and second azimuthal positions respectively, with the inner arcuate portion being in contact with the exterior of the fuselage; the tanks are optionally integrated in a single multiple-tank structure.

The aircraft may comprise at least one of a hydrogen-fuelled fuel-cell system and a hydrogen-burning gas turbine engine, and a conveying system arranged to convey hydrogen from the elongate hydrogen storage tanks to the hydrogen fuel-cell and/or the hydrogen-burning gas turbine engine.

### BRIEF DESCRIPTION OF THE DRAWINGS

Embodiments of the invention are described below by way of example only and with reference to the accompanying drawings in which:
- Figures 1 & 3: show transverse cross-sections of first and second example aircraft of the invention respectively; and
- Figure 2: shows a longitudinal cross-section of the aircraft of Figure 1.

### DETAILED DESCRIPTION

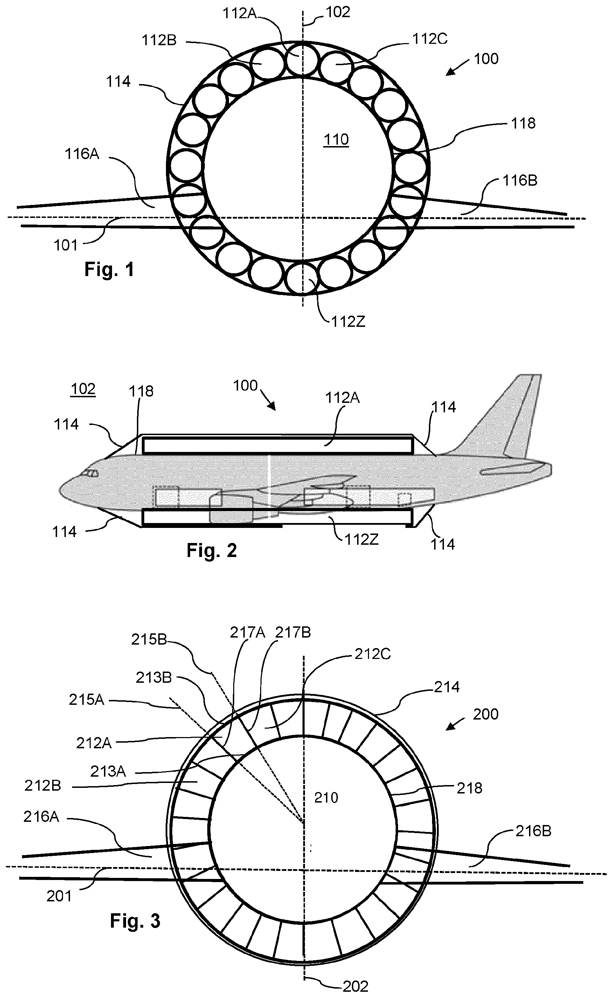

Figures 1 and 2 show a first example aircraft 100 of the invention having a fuselage 118, wings 116A, 116B and a plurality of like elongate cylindrical hydrogen storage tanks such as 112A, 112B, 112C each mounted on and extending generally parallel to the fuselage 118 within a fairing 114 such that the tanks are contiguous in azimuth with respect to the fuselage 118 and completely surround the fuselage 118. Tank 112A is mounted on the fuselage 118 at top dead-centre such that, with the aircraft 100 on the ground or in level flight, a vertical plane 102 which longitudinally bisects the fuselage 118 also longitudinally bisects the tank 112A. Horizontal plane 101 contains the tips of wings 116A, 116B. A hydrogen storage tank 112Z is mounted to the fuselage 118 at bottom dead-centre thereof. The interior 110 of the fuselage 118 provides space for passengers and/or cargo.

Figure 3 shows a transverse cross-section of a second example aircraft 200 of the invention, the aircraft 200 comprising fuselage 218, wings 216A, 216B and a plurality elongate hydrogen storage tanks such as 212A mounted on the exterior of the fuselage 218, each tank being in contact with two other tanks which are adjacent in azimuth with respect to the fuselage 218, the tanks extending completely azimuthally around the fuselage 218. Tanks 212B, 212C are adjacent in azimuth to tank 212A.

With the aircraft on the ground or in level flight, vertical plane 202 longitudinally bisects the fuselage 218. Tank 212A comprises inner and outer arcuate cylindrical portions 213A, 213B which extend between azimuthal positions 215A, 215B, the inner portion 213A being in contact with the fuselage 218, and planar portions 217A, 217B at the azimuthal positions 215A, 215B respectively, each of which connects the inner and outer arcuate portions 213A, 213B at a respective azimuthal position 215A, 215B. The hydrogen storage tanks are enclosed by a fairing 214 and the fuselage 218.

In a variant of the aircraft 200, contiguous individual hydrogen storage tanks are integrated in a single, multi-tank structure.

## Claims

1. An aircraft (100; 200) comprising a fuselage (118; 218) and a set of like elongate hydrogen storage tanks (112A-C; 212A-C) comprising first, second and third like elongate hydrogen storage tanks, each mounted to the exterior of the fuselage and extending parallel thereto, **characterised in that** the set extends completely azimuthally and contiguously around the fuselage, and **in that** the aircraft further comprises an aerodynamic fairing (114; 214), the aerodynamic fairing and the fuselage enclosing the elongate hydrogen storage tanks.

2. An aircraft (100) according to claim 1 wherein the elongate hydrogen storage tanks of the set are each cylindrical and have a common diameter.

3. An aircraft (200) according to claim 1 wherein each elongate hydrogen storage tank (212A) has cylindrical arcuate inner (213A) and outer (213B) portions extending between first (215A) and second (215B) azimuthal positions with respect to the fuselage (218), and first (217A) and second (217B) planar portions connecting the cylindrical arcuate portions at the first and second azimuthal positions respectively, and wherein the inner arcuate portion is in contact with the exterior of the fuselage (218).

4. An aircraft according to claim 3 wherein the elongate hydrogen storage tanks are integrated in a single multiple-tank structure.

5. An aircraft according to any preceding claim and comprising at least one of a hydrogen-fuelled fuel-cell system and a hydrogen-burning gas turbine engine, and further comprising a conveying system arranged to convey hydrogen from the elongate hydrogen storage tanks to the hydrogen fuel-cell and/or the hydrogen-burning gas turbine engine.

## Patentansprüche

1. Flugzeug (100; 200), umfassend einen Rumpf (118; 218) und einen Satz ähnlicher länglicher
Wasserstoffspeichertanks (112A-C; 212A-C), die erste, zweite und dritte ähnliche längliche Wasserstoffspeichertanks umfassen, die jeweils an der Außenseite des Rumpfes montiert sind und sich parallel dazu erstrecken, **dadurch gekennzeichnet, dass** sich der Satz vollständig azimutal und zusammenhängend um den Rumpf erstreckt und dass das Flugzeug ferner eine aerodynamische Verkleidung (114; 214) umfasst, wobei die aerodynamische Verkleidung und der Rumpf die länglichen Wasserstoffspeichertanks umschließen.

2. Flugzeug (100) nach Anspruch 1, wobei die länglichen Wasserstoffspeichertanks des Satzes jeweils zylindrisch sind und einen gemeinsamen Durchmesser aufweisen.

3. Flugzeug (200) nach Anspruch 1, wobei jeder längliche Wasserstoffspeichertank (212A) zylindrische bogenförmige innere (213A) und äußere (213B) Abschnitte aufweist, die sich zwischen einer ersten (215A) und einer zweiten (215B) azimutalen Position in Bezug auf den Rumpf (218) erstrecken, und erste (217A) und zweite (217B) ebene Abschnitte, die die zylindrischen bogenförmigen Abschnitte an der ersten bzw. der zweiten azimutalen Position verbinden, und wobei der innere bogenförmige Abschnitt in Kontakt mit der Außenseite des Rumpfes (218) ist.

4. Flugzeug nach Anspruch 3, wobei die länglichen Wasserstoffspeichertanks in eine einzelne Mehrfachtankstruktur integriert sind.

5. Flugzeug nach einem vorhergehenden Anspruch, und umfassend mindestens eines von einem mit Wasserstoff versorgten Brennstoffzellensystem und einem wasserstoffverbrennenden Gasturbinentriebwerk und ferner umfassend ein Fördersystem, das angeordnet ist, um Wasserstoff von den länglichen Wasserstoffspeichertanks zu der Wasserstoffbrennstoffzelle und/oder dem wasserstoffverbrennenden Gasturbinentriebwerk zu fördern.

## Revendications

1. Aéronef (100 ; 200) comprenant un fuselage (118 ; 218) et un ensemble de réservoirs de stockage d'hydrogène allongés (112A à C ; 212A à C) comprenant des premier, deuxième et troisième réservoirs de stockage d'hydrogène allongés similaires, chacun monté à l'extérieur du fuselage et s'étendant parallèlement à celui-ci, **caractérisé en ce que** l'ensemble s'étend complètement azimutalement et de manière contiguë autour du fuselage, et **en ce que** l'aéronef comprend en outre un carénage aérodynamique (114 ; 214), le carénage aérodynamique et le fuselage entourant les réservoirs de stockage d'hydrogène allongés.

2. Aéronef (100) selon la revendication 1, dans lequel les réservoirs de stockage d'hydrogène allongés de l'ensemble sont chacun cylindriques et ont un diamètre commun.

3. Aéronef (200) selon la revendication 1, dans lequel chaque réservoir de stockage d'hydrogène allongé (212A) comporte des parties intérieure (213A) et extérieure (213B) arquées cylindriques s'étendant entre des première (215A) et seconde (215B) positions azimutales par rapport au fuselage (218), et des première (217A) et seconde (217B) parties planes reliant les parties arquées cylindriques au niveau des première et seconde positions azimutales respectivement, et dans lequel la partie arquée intérieure est en contact avec l'extérieur du fuselage (218).

4. Aéronef selon la revendication 3, dans lequel les réservoirs de stockage d'hydrogène allongés sont intégrés dans une seule structure à réservoirs multiples.

5. Aéronef selon l'une quelconque des revendications précédentes et comprenant au moins l'un d'un système de pile à combustible alimenté à l'hydrogène et d'un moteur à turbine à gaz à combustion d'hydrogène, et comprenant en outre un système de transport conçu pour transporter de l'hydrogène depuis les réservoirs de stockage d'hydrogène allongés jusqu'à la pile à combustible à hydrogène et/ou au moteur à turbine à gaz à combustion d'hydrogène.
